# EUROPEAN PATENT APPLICATION

(11) **EP 0 746 140 A1**
(43) Date of publication of application: **04.12.1996**
(21) Application number: 96108753.3
(22) Date of filing: 31.05.1996
(51) Int. Cl.: H04N 1/32, G06F 3/12

(54) **Control unit for a printer and a plotter**

(30) Priority: 02.06.1995 JP 137058/95
(71) Applicant: MAX CO., LTD., Tokyo (JP)
(72) Inventor: Nobe, Nobuyuki, c/o MAX Co., Ltd., Chuo-ku, Tokyo (JP)
(74) Representative: Pfenning, Meinig & Partner

(57) **Abstract**

A control unit (1) for a printer and plotter has a processing-mode setting function (10), a destination setting function (11) for setting a destination to which data is transmitted, and an output-data selecting function (12). In the processing-mode setting function (10), either single processing in which printing or cutting is performed or complex processing in which both the printing and the cutting out are performed is selected. In the output-data selecting function (12), both character data and figure data are simultaneously output or one of them is output. The character and figure data stored in a memory (7) are provided with an attribute of distinguishing the characters from the figures. The character and figure data input by a keyboard (6) are displayed on an LCD (8). For example, only the character data is output to a thermal printer (2) to print the characters, and a printed sheet is set in a cutting plotter (3). After that, only the figure data is output. As a result, a cut sheet is made which is formed into a desired shape and on which the characters are printed.

## Description

### BACKGROUND OF THE INVENTION

### 1. Field of the Invention

This invention relates to a control unit used to output data to a printer and a cutting plotter, and more particularly to a function of outputting the data.

### 2. Description of the Prior Art

Conventionally, a cutting plotter is known which makes a character-sheet cut out of, for example, a plastic sheet film for decoration such as a store window display. A thermal printer is also known which is capable of printing optionally-sized characters or figures on, for example, a plastic sheet film for similar decoration.

In order to make a cut sheet which is cut out of a plastic sheet film into an optional shape and on which characters or figures are printed, two steps are taken. One step is a printing step by a thermal printer, and the other is a cutting step by a cutting plotter.

Because the printing and cutting steps have no interconnection with each other when making the cut sheet, printing data is input to the thermal printer in the printing step, and cutting data is input to the cutting plotter in the cutting step. In other words, the two steps are carried out independently of each other

Accordingly, although an operator can view printing information or a cut-out shape of the sheet on the screen of a display when the respective data are input, the operator cannot view a finished state of the sheet in which the printing information and the cut-out shape thereof are combined with each other. Therefore, work efficiency is low and, in addition, a case might occur in which a desired result cannot be obtained.

### SUMMARY OF THE INVENTION

It is an object of the present invention to easily obtain a desired result by arranging to be capable of beforehand viewing a finished state in which printing information and a cut-out shape of a sheet are combined with each other.

The present invention is characterized in that a printer/plotter control unit comprises connections for a printer and a cutting plotter, a memory for storing character data and figure data, and a data processing means for reading out the character and figure data from the memory by the operation of a keyboard and displaying the read data on a display. The data processing means comprises an input mode in which the character data and the figure data are read out by means of the keyboard and are displayed on the display simultaneously, an output-data selecting mode in which data for printing or cutting is designated from the character data or the figure data, a destination setting mode in which determination is made of whether the output data is output to the printer or the plotter, and a processing-mode setting mode in which choice is made between single processing for printing or cutting and complex processing for carrying out the cutting after the completion of the printing in accordance with the designated data.

In the printer/plotter control unit according to the present invention, the printer and the plotter are connected to each other and thereby data about characters or figures can be output to both the printer and the plotter.

Character data and figure data are input, and the printer, for example, is designated as a destination. After that, the character data is designated as output-data and is processed. Thereby, only the character data is selected from the complex data consisting of the character and figure data simultaneously displayed on the display and is output to the printer so as to print the characters.

If the plotter is designated as a destination and the figure data is designated as output-data, only the figure data is selected and is output to the plotter so as to cut the sheet.

Accordingly, in order to make a cut sheet which is formed into an optional shape and on which characters and the like are printed, character data and figure data are input to display an image thereof on the display and then the printer prints characters or figures. After that, a printed sheet is set in the cutting plotter to cut out according to the figure data of the input data.

### BRIEF DESCRIPTION OF THE DRAWINGS

Fig. 1 is a block diagram of a printer/plotter system showing an embodiment of the present invention.
Fig. 2 is a flowchart showing an output selecting function of a printer/plotter control unit according to the present invention.
Fig. 3 is a displayed image of input data.
Fig 4(a) shows an output result of printing by means of the thermal printer by selecting the character data of Fig. 3, Fig. 4(b) shows a state in which a printed sheet of Fig. 4(a) is set in the plotter, and Fig. 4(c) shows an output result of cutting out by selecting the figure data.

### DETAILED DESCRIPTION OF THE EMBODIMENT

An embodiment of the present invention will be described hereinafter with reference to the attached drawings.

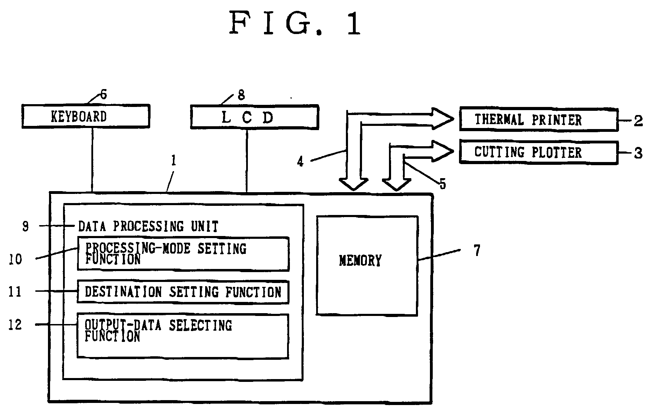

In Fig. 1, reference character 1 designates a printer/plotter control unit. The control unit 1 has a thermal printer connection circuit 4 as a printer connection, and a cutting plotter connecting circuit 5 as a plotter connection. The control unit 1 is connected to a thermal printer 2 and a cutting plotter 3 via respective cables.

Character data and figure data input by a keyboard 6 are stored in a memory 7 of the control unit 1 and are displayed on an LCD 8. When execution instructions for printing or cutting are input by the keyboard 6a a data processing unit 9 and the connecting circuits 4, 5 carry out conversion processing of the output data in accordance with the character data and/or figure data stored in the memory 7 and output the converted data to the thermal printer 2 and/or the plotter 3.

In a ROM of the memory 7, a series of character font data and figure data, such as data about rectangular frames or arrows, are stored. These data are provided with attribute for distinguishing the characters from the figures.

In detail, the ROM of the memory 7 stores font data about characters corresponding to, for example, a JIS code (Japanese Industrial Standard code) and figure data about predetermined images. In order to make a cut-out image cut out by the plotter 3, in the character font data and the figure data, the outline of the font is formed as image data. Accordingly, when printed, conversion processing is carried out to print a part surrounded by the outline of the font. This conversion processing is carried out by the data processing unit 9 and the printer connecting circuit 4.

The data processing unit 9 stores a system program and a document processing program under which designated data is called from the memory 7 by means of the keyboard 6 and is displayed on the LCD 8. The document processing program includes an input mode in which characters and figures are displayed on the LCD a by operating the keyboard 6, a processing-mode setting function 10 for determining either single processing for printing or cutting or complex processing for both the printing and the cutting, a destination setting function 11 for setting a destination to which data is transmitted, and an output-data selecting function 12 in which determination is made as to whether both character data and figure data are output or only one of the two is output. The respective functions are set by operating the keyboard 6.

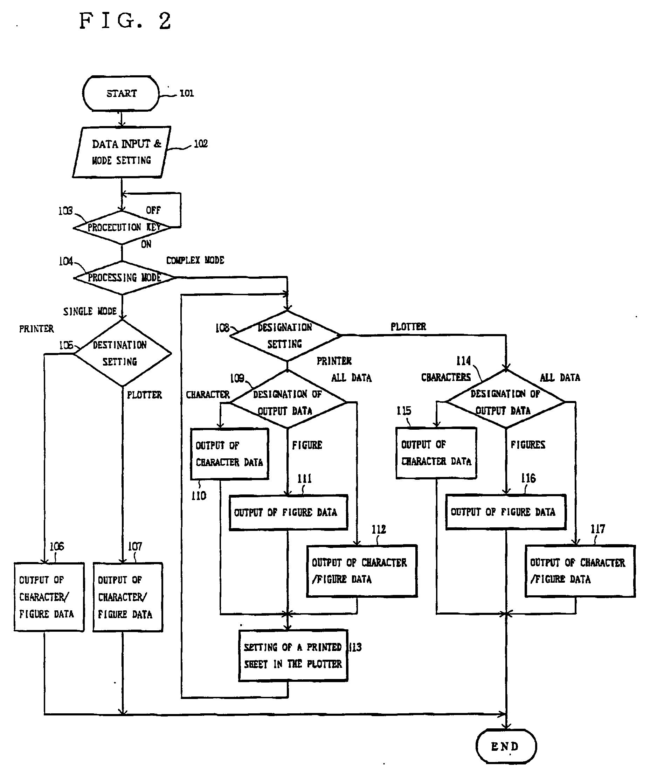

The operation of the printer/plotter control unit will now be described with reference to the flowchart of Fig. 2.

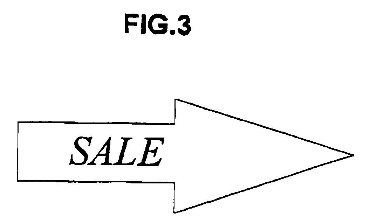

First, electric power is turned on (step 101). Character data and figure data, such as that shown in Fig. 3, are then input by means of the keyboard 6. Additionally, a mode of the single or complex processing is determined, and a destination to which data is output is determined, and moreover an output-data selecting mode is determined (step 102). When an execution key is struck (step 103), the stage proceeds from step 104 to step 105 if the single processing mode is selected. In the single processing mode, when the thermal printer 2 is designated as a destination, the stage proceeds to step 106 in which the character and figure data are transmitted to the thermal printer 2 so as to print all the data.

When the cutting plotter 3 is designated as a destination, the stage proceeds from step 105 to step 107 in which the character and figure data are transmitted to the cutting plotter 3 so as to carry out cutting processing of all the data.

On the other hand, if the complex mode is selected, the stage proceeds from step 104 to step 108, and a destination to which data is output is determined as in step 105. When the destination is the thermal printer 2, the stage proceeds to step 109 in which character data, figure data, or both of the character and figure data are output according to the output-data selecting mode (steps 110, 111, and 112, respectively)

When any of steps 110, 111, and 112 is completed, the operator manually sets a sheet 13, on which characters have been printed, in the plotter 3 (step 113). The stage returns to step 108. If the plotter 3 is selected in step 108, output data is determined based on the output data designated in step 102 (step 114) According to a result obtained in step 114, determination is made as to whether character data is output (step 115), or figure data is output (step 116), or both of the character and figure data are output (step 117).

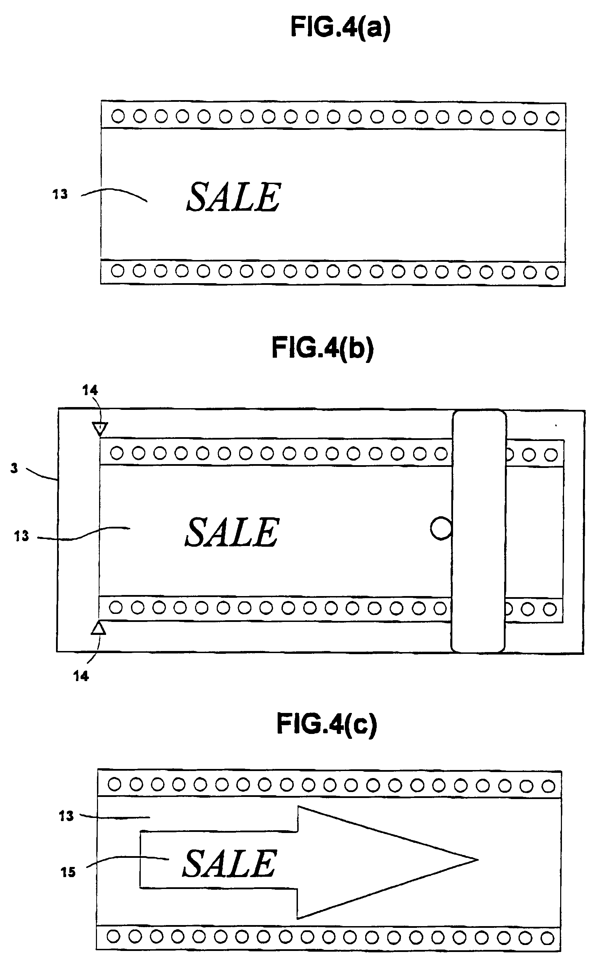

Accordingly, in order to make a cut sheet which is formed into an arrow shape and on which characters shown in Fig. 3 are printed, character data and figure data are first input as shown in Fig. 3, and then a complex processing mode is selected. Thereafter, the thermal printer is designated as a destination to which data is transmitted, and the character data is designated as output data. When the execution key is struck, only characters are printed on a sheet made of, for example, vinyl chloride by means of the printer 2 as shown in Fig. 4(a).

Subsequently, in order to cut the printed sheet 13, the sheet 13 is set in the plotter 3 in step 113. The sheet 13 is set in such a way that the left end of the sheet 13 is caused to coincide with a positioning mark 14 which serves to bring about a coincidence of a relative positional relationship between cutting coordinates and printing coordinates of the thermal printer 2 as shown in Fig. 4(b).

Thereafter, the cutting plotter 3 is designated as a destination, and the figure data is designated as output data. When the execution key is struck, the sheet 13 is cut into an arrow shape and, as a result, a cut sheet 15 shaped an arrow is made as shown in Fig. 4(c).

The present invention is not limited to the above embodiment, and various variants can be adopted. For example, instead of providing the font data about characters or prototype data about figures with the distinguishing attribute, an arrangement can be made in which the attribute is optionally written into character data or figure data.

As mentioned above, according to the present invention, character data and figure data are displayed on the screen of a display, and data for printing processing and data for cutting processing are selected and designated from the displayed character and figure data. Therefore, a shape cut out of a sheet and an image to be printed are clearly viewed and a cut sheet can be obtained as desired. Additionally, a failure occurring when printing is carried out after the sheet is cut is prevented because cutting is carried out after printing is completed.

Accordingly, in complex operations in which the printing step and the cutting step are combined with each other, since a finished state in which characters to be printed and a shape of the sheet to be cut out are combined with each other can be beforehand viewed, a result as desired can be easily obtained and, by rationalizing the complex operations, the work efficiency of making a cut sheet is greatly enhanced

## Claims

1. A control unit for a printer and a cutting plotter, comprising:
a printer connection for connecting said control unit to said printer;
a plotter connection for connecting said control unit to said cutting plotter;
a memory for storing character data and figure data; and
data processing means for reading out said character data and said figure data from said memory by operating a keyboard and displaying read-out data on a display; said data processing means having:
an input mode in which said character data and said figure data are read out by means of said keyboard and are displayed on said display simultaneously;
an output-data selecting mode in which output-data for printing or cutting is selected from said character data and said figure data;
a destination setting mode in which determination is made of whether the output-data is output to said printer or said plotter; and
a processing setting mode in which choice is made between single processing of printing or cutting and complex processing of carrying out the cutting after completion of the printing in accordance with the selected output-data.
